# FASCICULE DE BREVET EUROPEEN

(11) **EP 1 872 932 B1**
(45) Date de publication et mention de la délivrance du brevet: **13.08.2014**
(21) Numéro de dépôt: 07356078.1
(22) Date de dépôt: 12.06.2007
(51) Int. Cl.: B32B 3/06, B62D 29/04

(54) **Ensemble fibreaux pour piece composite, piece composite et procede de fabrication d'une telle piece composite**
Fasereinheit für Verbundteile, Verbundteil und Herstellungsverfahren eines solchen Verbundteils
Fibrous assembly for a composite part, composite part and method of manufacturing such a composite part

(30) Priorité: 13.06.2006 FR 0605245
(43) Date de publication de la demande: 02.01.2008
(73) Titulaire: SKF Aerospace France, 26240 Saint Vallier (FR)
(72) Inventeur: Buchin, Jean-Michel, FR-39000 Lons le Saunier (FR); Genot Michel, FR-39140 Relans (FR)
(74) Mandataire: Myon, Gérard Jean-Pierre

(56) Documents cités:
- WO-A2-2004/024533
- DE-A1- 4 303 054
- FR-A1- 2 572 788
- US-A- 5 635 272
- US-A- 5 776 582

## Description

La présente invention a trait à un ensemble fibreux pour pièce composite, à une pièce composite et à un procédé de fabrication d'une telle pièce composite.

Dans le domaine aéronautique, il est connu d'utiliser des pièces en matériau composite pour relier des pièces de structure et transmettre des mouvements ou des efforts. Notamment, il est connu d'utiliser des pièces composites à section en T pour réaliser des liaisons entre un fuselage et des bielles de structure ou de commande d'un aéronef. Une telle pièce composite à section en T est classiquement fabriquée par empilement de tissus fibreux individuels dans un moule à section en T, puis par injection et polymérisation d'une résine polymère dans ce moule. Lors de leur mise en place dans le moule, les tissus individuels sont pliés un à un en forme de L, de manière à s'étendre à la fois dans la barre verticale et dans une moitié de la barre horizontale du T. Une telle opération est longue et fastidieuse. De plus, du fait du pliage en L des tissus individuels de part et d'autre d'un axe central du T, la tenue mécanique de la pièce composite en T est assurée uniquement par la résine au niveau de la jonction entre les barres verticale et horizontale du T. Il en résulte une tenue mécanique limitée de la pièce composite dans cette zone où les contraintes sont maximales.

Par ailleurs, US-A-5,776,582 décrit une plaque composite propre à être emboîtée dans une plaque composite analogue par mise en prise de motifs complémentaires prévus sur chaque plaque. La pièce composite obtenue par l'emboîtement de ces deux plaques composites présente une tenue mécanique limitée. En effet, il s'agit d'un assemblage purement mécanique des deux plaques, qui ne confère pas à la pièce composite résultante des caractéristiques mécaniques suffisantes pour que celle-ci puisse être utilisée en tant que pièce de liaison entre des pièces de structure, par exemple dans un aéronef.

C'est à ces inconvénients qu'entend plus particulièrement remédier l'invention en proposant un ensemble fibreux pour pièce composite, c'est-à-dire un ensemble fibreux au sein et autour duquel une matrice polymère est destinée à être injectée en vue de former une pièce composite, permettant d'obtenir une pièce composite dont les caractéristiques mécaniques sont améliorées et dont le procédé de fabrication est simple et rapide.

A cet effet, l'invention a pour objet un ensemble fibreux pour pièce composite, comprenant au moins deux préformes comportant chacune des tissus fibreux empilés, caractérisé en ce que chaque préforme comporte au moins un motif, le motif d'une première préforme étant sensiblement complémentaire du motif de la deuxième préforme et les première et deuxième préformes étant aptes à être emboîtées l'une dans l'autre par mise en prise de leurs motifs respectifs.

Selon d'autres caractéristiques avantageuses de l'invention:
- les motifs des première et deuxième préformes ont des surfaces conjuguées destinées à coopérer lorsque les motifs sont en prise et aptes à maintenir les préformes emboîtées l'une dans l'autre ;
- la direction d'empilement des tissus de la première préforme est transversale par rapport à la direction d'empilement des tissus de la deuxième préforme emboîtée dans la première préforme ;
- la direction d'empilement des tissus de la première préforme est sensiblement perpendiculaire à la direction d'empilement des tissus de la deuxième préforme emboîtée dans la première préforme ;
- les première et deuxième préformes sont des plaques de tissus fibreux empilés, le plan des tissus de la première préforme étant transversal par rapport au plan des tissus de la deuxième préforme emboîtée dans la première préforme, ces plans étant concourants dans la zone d'emboîtement des préformes ;
- la première préforme est une plaque de tissus fibreux empilés, alors que la deuxième préforme est un tube de tissus fibreux empilés, le plan des tissus de la première préforme étant transversal par rapport aux droites génératrices de la deuxième préforme emboîtée dans la première préforme, ce plan et ces droites étant concourants dans la zone d'emboîtement des préformes.

L'invention a également pour objet une pièce composite comprenant un ensemble fibreux tel que décrit ci-dessus et une matrice polymère.

De manière avantageuse, l'ensemble fibreux est constitué en fibres de carbone, de verre ou d'aramide, la matrice polymère étant une résine polymère.

Enfin, l'invention a pour objet un procédé de fabrication d'une pièce composite comprenant des étapes dans lesquelles :
- on forme au moins deux préformes par empilement de tissus fibreux ;
- on découpe au moins un motif dans chaque préforme, le motif d'une première préforme étant sensiblement complémentaire du motif de la deuxième préforme ;
- on emboîte les première et deuxième préformes l'une dans l'autre par mise en prise de leurs motifs respectifs ;
- on injecte une résine polymère autour des première et deuxième préformes emboîtées.

La découpe des motifs des première et deuxième préformes peut être réalisée à l'emporte-pièce, au jet d'eau, au laser ou manuellement.

Les caractéristiques et avantages de l'invention apparaîtront dans la description qui va suivre de plusieurs modes de réalisation d'un ensemble fibreux et d'une pièce composite selon l'invention, donnée uniquement à titre d'exemple et faite en se référent aux dessins annexés dans lesquels :
- la figure 1 est une vue en perspective éclatée d'un ensemble fibreux conforme à un premier mode de réalisation de l'invention ;
- la figure 2 est une vue analogue à la figure 1, les préformes de l'ensemble fibreux étant emboîtées ;
- la figure 3 est une vue à plus grande échelle du détail III de la figure 1 ;
- la figure 4 est une vue en perspective éclatée d'un ensemble fibreux conforme à un deuxième mode de réalisation de l'invention ;
- la figure 5 est une vue analogue à la figure 4, les préformes de l'ensemble fibreux étant emboîtées ;
- la figure 6 est une vue en perspective éclatée d'un ensemble fibreux conforme à un troisième mode de réalisation de l'invention ; et
- la figure 7 est une vue en perspective éclatée d'un ensemble fibreux conforme à un quatrième mode de réalisation de l'invention,

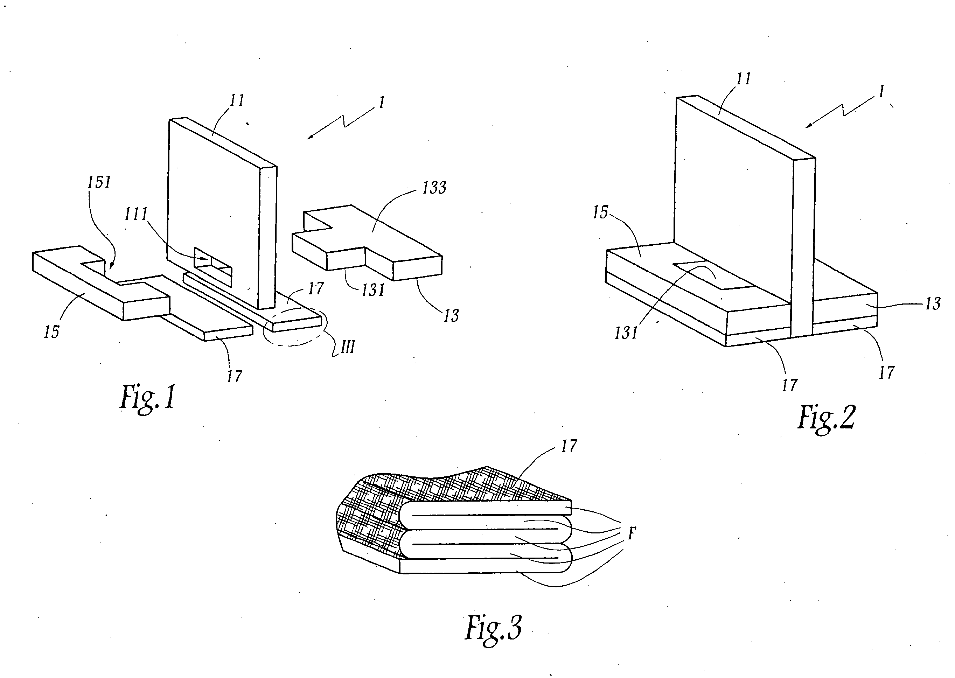

L'ensemble fibreux 1, représenté aux figures 1 et 2, est destiné à constituer un renfort fibreux pour une pièce composite. L'ensemble fibreux 1 est à section transversale en T. La pièce composite monobloc obtenue par injection d'une matrice polymère dans l'ensemble fibreux 1 peut par exemple former une pièce de liaison entre un fuselage et une bielle de structure ou de commande d'un aéronef.

L'ensemble fibreux 1 comprend cinq préformes destinées à être assemblées pour former l'ensemble fibreux 1 à section en T. Chaque préforme de l'ensemble fibreux est une plaque de tissus de fibres de carbone empilés les uns sur les autres. Comme illustré à la figure 3 pour une préforme 17, chaque préforme est obtenue par pliage en couches successives d'un même tissu F.

En variante, plusieurs bandes de tissus individuelles peuvent être superposées pour former chaque préforme de l'ensemble fibreux 1, les fibres de carbone pouvant également être remplacées par des fibres de verre ou d'aramide.

Chaque préforme de l'ensemble fibreux 1 est destinée à constituer un segment du T. Une préforme 11 est prévue pour former la barre verticale du T, alors que des préformes 13, 15 et 17 sont destinées à former ensemble la barre horizontale du T.

Les préformes 11, 13 et 15 comportent des motifs en relief ou en creux permettant leur emboîtement mutuel. La préforme 11 comporte un logement 111 traversant, s'étendant entre les plans de tissu supérieur et inférieur de la préforme 11. La préforme 13 a une section transversale globalement en forme de T, la barre verticale du T étant formée par un motif 131 en saillie par rapport à la barre horizontale 133 du T. Le motif 131 est sensiblement complémentaire du logement 111, de telle sorte que la préforme 13 peut être emboîtée dans la préforme 11 par mise en prise du motif 131 dans le logement 111. Par ailleurs, la préforme 15 comporte un motif 151 en creux, qui confère à la préforme 15 une section transversale globalement en forme de C. Le motif 151 en creux est sensiblement complémentaire de la portion d'extrémité du motif 131 en saillie de la préforme 13, de telle sorte que la préforme 15 peut être emboîtée dans la préforme 13 par mise en prise du motif 131 dans le motif 151.

Les motifs 111, 131 et 151 présentent des surfaces conjuguées destinées à être en contact lorsque les préformes 11, 13 et 15 sont emboîtées les unes dans les autres. Ces surfaces conjuguées ont une étendue suffisante pour permettre la tenue des préformes 11, 13 et 15 emboîtées les unes dans les autres.

L'ensemble fibreux 1 comprend en outre deux préformes 17 destinées à être placées en appui contre les préformes 13 et 15, de part et d'autre de la préforme 11, de manière à renforcer la barre horizontale du T formé par l'ensemble fibreux 1.

Un procédé de fabrication de l'ensemble fibreux 1 conforme à l'invention, et d'une pièce composite monobloc comprenant l'ensemble fibreux 1 comme renfort fibreux, comprend des étapes dans lesquelles :

Tout d'abord, on prépare les préformes 11, 13, 15 et 17 de l'ensemble fibreux 1.

A cet effet, des plaques parallélépipédiques de tissus de fibres de carbone sont formées, par pliage de couches successives d'un même tissu F de fibres de carbone, poudrage de l'empilement obtenu avec une poudre époxyde et chauffage à une température de l'ordre de 100°C. On obtient ainsi des plaques rigides de tissus de fibres de carbone, dont l'épaisseur peut être modulée en fonction du nombre de plis du tissu F réalisés. De manière avantageuse, les plaques sont formées aux dimensions des préformes souhaitées. En variante, des plaques de grandes dimensions peuvent être réalisées, dans lesquelles on découpe les profils de chaque préforme.

Les préformes obtenues sont ensuite pourvues de leurs motifs respectifs par découpe des préformes. La découpe du logement 111 de la préforme 11, du motif 131 en saillie de la préforme 13 et du motif 151 en creux de la préforme 15 est réalisée à l'emporte-pièce.

Les préformes sont alors aptes à être emboîtées les unes dans les autres, par mise en prise de leurs motifs respectifs. Le motif 131 en saillie de la préforme 13 est inséré dans le logement 111 de la préforme 11, puis encastré dans la préforme 13 par mise en prise du motif 131 en saillie dans le motif 151 en creux de la préforme 15. Les préformes 17 sont également positionnées en appui contre les préformes 13 et 15, de part et d'autre de la préforme 11, comme montré à la figure 2.

L'ensemble fibreux 1 à section transversale en T obtenu est ensuite introduit dans un moule de forme adaptée, non représenté sur les figures, dans lequel on injecte autour des préformes une résine polymère à l'état liquide, telle qu'une résine époxyde, à une température comprise entre environ 80 et 160°C. Lorsque la résine est en place à l'intérieur du moule, celle-ci est soumise à une étape de polymérisation à une température comprise entre environ 120 et 180°C. Cette étape permet d'atteindre un état de vitrification de la résine, qui confère à la pièce composite ainsi fabriquée une bonne rigidité et un bon état de surface.

Un tel procédé de fabrication d'une pièce composite est rapide et simple à mettre en oeuvre. La mise en moule des préformes en tissus fibreux secs est aisée et rapide, grâce à la mise en forme et à l'assemblage des tissus préalablement à leur insertion dans le moule. La découpe à l'emporte-pièce des préformes de l'ensemble fibreux 1 permet également de réduire le temps de fabrication.

La pièce composite monobloc à section transversale en T réalisée grâce à ce procédé présente des propriétés mécaniques très satisfaisantes, notamment au niveau de la jonction entre les barres verticale et horizontale du T. En effet, cette jonction correspond à la zone d'emboîtement des préformes, dans laquelle les plans des tissus constitutifs de chaque préforme sont sensiblement perpendiculaires les uns aux autres. Ainsi, la pièce composite conforme à l'invention est particulièrement renforcée dans cette zone de jonction angulaire, ce qui est avantageux car les contraintes sont maximales dans cette zone lorsque la pièce est soumise à des efforts.

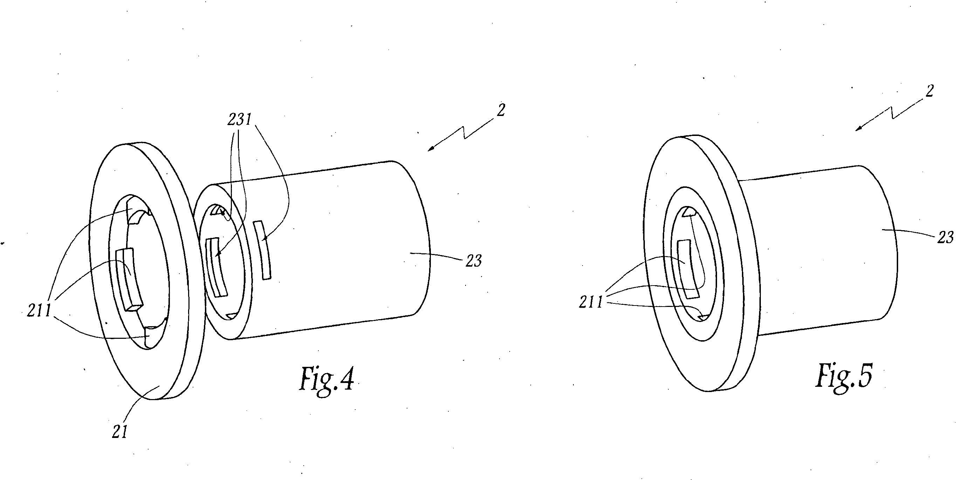

Dans le deuxième mode de réalisation représenté aux figures 4 et 5, un ensemble fibreux 2 comprend deux préformes 21 et 23. Une première préforme 21 est annulaire et est obtenue de manière similaire au mode de réalisation précédent, par formation et découpe d'une plaque de tissus de fibres de carbone empilés. La plaque de tissus fibreux est réalisée par empilement de couches successives d'un tissu F de fibres de carbone, les couches étant liées entre elles par poudrage époxyde et chauffage à une température de l'ordre de 100°C. La plaque de tissus fibreux ainsi obtenue est ensuite découpée à l'emporte-pièce de façon à former la préforme 21 de forme annulaire. Des motifs 211 en saillie sont également ménagés à l'emporte-pièce sur la surface radiale interne de la préforme 21.

La deuxième préforme 23 est de forme tubulaire et est obtenue par enroulement de tissus de fibres de carbone sur un mandrin non représenté. Les couches enroulées de tissu sont liées par poudrage époxyde et chauffage à une température de l'ordre de 100°C. A la suite de cette opération de chauffage, la préforme 23 tubulaire peut être extraite par rapport au mandrin par coulissement relativement à celui-ci. Des logements 232 traversants, s'étendant entre la couche de tissu la plus intérieure et la couche de tissu la plus extérieure de la préforme 23, sont réalisés à l'emporte-pièce, de façon à être sensiblement complémentaires des motifs 211 en saillie de la surface radiale interne de la préforme 21.

Les préformes 21 et 23 sont ainsi aptes à être emboîtées l'une dans l'autre, par mise en prise des motifs 211 en saillie de la préforme 21 dans les logements 231 de la préforme 23. L'ensemble fibreux 2 obtenu peut ensuite être introduit dans un moule de forme adaptée, non représenté. On injecte alors dans le moule une résine polymère, telle qu'une résine époxyde, et on la soumet à une étape de polymérisation, comme décrit dans le mode de réalisation précédent.

La pièce composite monobloc comprenant l'ensemble fibreux 2 conforme à ce deuxième mode de réalisation présente une tenue mécanique très satisfaisante au niveau de la jonction entre les préformes 21 et 23. En effet, cette jonction correspond à la zone d'emboîtement des préformes, dans laquelle le plan des tissus constitutifs de la préforme 21 est sensiblement perpendiculaire aux droites génératrices de la préforme 23 tubulaire, c'est-à-dire au plan local des tissus constitutifs de la préforme 23. Ainsi, la pièce composite obtenue avec l'ensemble fibreux 2 est renforcée dans cette zone de jonction, ce qui est avantageux car les contraintes sur la pièce sont maximales dans cette zone.

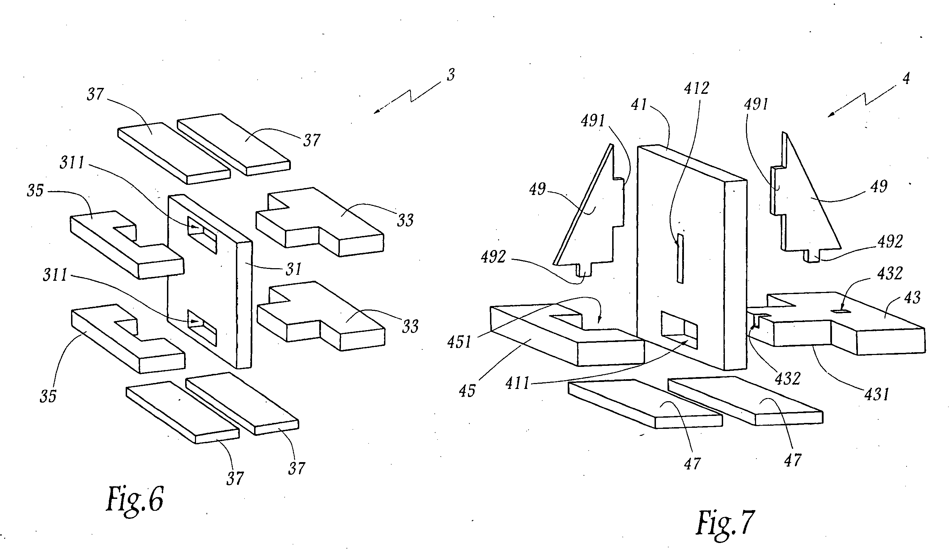

Les troisième et quatrième modes de réalisation de l'invention, représentés respectivement aux figures 6 et 7, sont d'autres exemples de géométries d'ensembles fibreux destinés à constituer des renforts fibreux de pièces composites. L'ensemble fibreux 3 conforme au troisième mode de réalisation de l'invention est à section transversale en 1, obtenu par emboîtement mutuel de préformes 31, 33, 35 et 37 analogues aux préformes 11, 13, 15 et 17 du premier mode de réalisation, la préforme 31 étant pourvue de deux logements 311 analogues au logement 111 du premier mode de réalisation.

L'ensemble fibreux 4 du quatrième mode de réalisation de l'invention est un perfectionnement de l'ensemble fibreux 1 à section transversale en T du premier mode de réalisation. L'ensemble fibreux 4 comprend des préformes 41, 43, 45 et 47 analogues aux préformes 11, 13, 15 et 17 du premier mode de réalisation, avec des motifs 411, 431 et 451 analogues aux motifs 111, 131 et 151. Il comprend en outre des ailettes 49 de renfort latéral de la jonction entre les barres verticale et horizontale du T. Les ailettes 49 sont obtenues par formation et découpe de plaques de tissus de fibres de carbone, comme décrit précédemment. Des motifs 491 et 492 sont également découpés à l'emporte- pièce sur chaque ailettes 49, des motifs complémentaires 412 et 432 étant respectivement ménagés sur les préformes 41 et 43 qui sont analogues aux préformes 11 et 13 du premier mode de réalisation. Ceci permet un emboîtement mutuel des préformes 41, 43 et 49 en plus de l'emboîtement des préformes 41, 43 et 45 analogue au premier mode de réalisation à travers un logement 411 de la préforme 41. Les ensembles fibreux 3 et 4 sont destinés à constituer des renforts fibreux de pièces composites monoblocs, obtenues par injection et polymérisation d'une résine polymère.

Comme il ressort des exemples de réalisation décrits, l'invention permet d'obtenir, selon un procédé simple et rapide, des pièces composites monoblocs de géométries variées et complexes présentant des propriétés mécaniques très satisfaisantes. Dans les modes de réalisation décrits, les préformes d'un ensemble fibreux conforme à l'invention s'étendent selon des plans transversaux les unes par rapport aux autres, après emboîtement. Dans les exemples décrits, les plans des préformes sont sensiblement perpendiculaires entre eux. Ainsi, les caractéristiques mécaniques des pièces composites conformes à l'invention sont particulièrement bonnes dans les zones de jonction angulaire de ces pièces qui correspondent aux zones d'emboîtement des préformes, ce qui est avantageux car ces zones de jonction angulaire constituent des zones de contraintes maximales.

L'invention n'est pas limitée aux exemples décrits et représentés. En particulier, la découpe des préformes peut être réalisée par d'autres techniques que l'emporte-pièce, notamment au jet d'eau, au laser ou manuellement.

## Revendications

1. Ensemble fibreux (1 ; 2 ; 3 ; 4) pour pièce composite, comprenant au moins deux préformes (11, 13, 15, 17 ; 21, 23 ; 31, 33, 35, 37 ; 41, 43, 45, 47, 49) comportant chacune des tissus (F) fibreux empilés, **caractérisé en ce que** chaque préforme comporte au moins un motif (111, 131, 151 ; 211, 231 ; 311 ; 411, 412, 431, 451, 432, 491, 492), le motif (111, 151 ; 211 ; 311 ; 411, 412, 451) d'une première préforme (11, 15 ; 21 ; 31 ; 41, 45) étant sensiblement complémentaire du motif (131 ; 231 ; 431, 491, 492) de la deuxième préforme (13 ; 23 ; 33 ; 43, 49) et les première et deuxième préformes étant aptes à être emboîtées l'une dans l'autre par mise en prise de leurs motifs respectifs.

2. Ensemble fibreux selon la revendication 1, **caractérisé en ce que** les motifs (111, 131 ; 211, 231 ; 311 ; 411, 431, 451, 412, 491, 492) des première (11, 15 ; 21 ; 31 ; 41, 45) et deuxième (13 ; 23 ; 33; 43, 49) préformes ont des surfaces conjuguées destinées à coopérer lorsque les motifs sont en prise et aptes à maintenir les préformes emboîtées l'une dans l'autre.

3. Ensemble fibreux selon l'une quelconque des revendications précédentes, **caractérisé en ce que** la direction d'empilement des tissus (F) de la première préforme (11, 15 ; 21 ; 31 ; 41, 45) est transversale par rapport à la direction d'empilement des tissus (F) de la deuxième préforme (13 ; 23 ; 33 ; 43, 49) emboîtée dans la première préforme.

4. Ensemble fibreux selon l'une quelconque des revendications précédentes, **caractérisé en ce que** la direction d'empilement des tissus (F) de la première préforme (11, 15 ; 21 ; 31 ; 41, 45) est sensiblement perpendiculaire à la direction d'empilement des tissus (F) de la deuxième préforme (13 ; 23 ; 33 ; 43, 49) emboîtée dans la première préforme.

5. Ensemble fibreux (1 ; 3 ; 4) selon l'une quelconque des revendications précédentes, caractérisé que ce que les première (11 ; 31 ; 41) et deuxième (13 ; 33 ; 49) préformes sont des plaques de tissus (F) fibreux empilés, le plan des tissus de la première préforme étant transversal par rapport au plan des tissus de la deuxième préforme emboîtée dans la première préforme, ces plans étant concourants dans la zone d'emboîtement des préformes.

6. Ensemble fibreux (2) selon l'une quelconque des revendications 1 à 4, **caractérisé en ce que** la première préforme (21) est une plaque de tissus (F) fibreux empilés, alors que la deuxième préforme (23) est un tube de tissus (F) fibreux empilés, le plan des tissus de la première préforme étant transversal par rapport aux droites génératrices de la deuxième préforme emboîtée dans la première préforme, ce plan et ces droites étant concourants dans la zone d'emboîtement des préformes.

7. Pièce composite, **caractérisée en ce qu'**elle comprend un ensemble fibreux (1 ; 2 ; 3 ; 4) selon l'une quelconque des revendications précédentes et une matrice polymère.

8. Pièce composite selon la revendication 7, **caractérisée en ce que** l'ensemble fibreux (1 ; 2 ; 3 ; 4) est constitué en fibres de carbone, de verre ou d'aramide, la matrice polymère étant une résine polymère.

9. Procédé de fabrication d'une pièce composite, **caractérisé en ce qu'**il comprend des étapes dans lesquelles
- on forme au moins deux préformes (11, 13, 15, 17 ; 21, 23 ; 31, 33, 35, 37 ; 41, 43, 45, 47, 49) par empilement et poudrage de tissus (F) fibreux ;
- on découpe au moins un motif (111, 131, 151 ; 211, 231 ; 311 ; 411, 412, 431, 451, 432, 491, 492) dans chaque préforme, le motif (111, 151 ; 211 ; 311 ; 411, 412, 4511) d'une première préforme (11 ; 21 ; 31 ; 41, 45) étant sensiblement complémentaire du motif (131 ; 231 ; 431, 491, 492) de la deuxième préforme (13 ; 23 ; 33 ; 43, 49) ;
- on emboîte les première (11, 15 ; 21 ; 31 ; 41, 45) et deuxième (13 ; 23 ; 33 ; 43, 49) préformes l'une dans l'autre par mise en prise de leurs motifs (111, 131, 151 ; 211, 231 ; 311 ; 411, 412, 431, 451, 491, 492) respectifs ;
- on injecte une résine polymère autour des première et deuxième préformes emboîtées.

10. Procédé de fabrication selon la revendication 9, **caractérisé en ce que** la découpe des première (11, 15 ; 21 ; 31 ; 41, 45) et deuxième (13 ; 23 ; 33 ; 43, 49) préformes est réalisée à l'emporte-pièce, au jet d'eau, au laser ou manuellement.

## Patentansprüche

1. Faseranordnung (1; 2; 3; 4) für Verbundteil, mit wenigstens zwei Vorformlingen (11, 13, 15, 17; 21, 23; 31, 33, 35, 37; 41, 43, 45, 47, 49), die jeweils übereinandergelegte faserartige Gewebe (F) enthalten, **dadurch gekennzeichnet, dass** jeder Vorformling wenigstens ein Muster (111, 131, 151; 211, 231; 311; 411, 412, 431, 451, 432, 491, 492) enthält, wobei das Muster (111, 151; 211; 311; 411, 412, 451) eines ersten Vorformlings (11, 15; 21; 31; 41, 45) zu dem Muster (131; 231; 431, 491, 492) des zweiten Vorformlings (13; 23; 33; 43, 49) im Wesentlichen komplementär ist und der erste und der zweite Vorformling dafür ausgelegt sind, durch Herstellen eines Eingriffs zwischen ihren jeweiligen Mustern ineinander eingesetzt zu werden.

2. Faseranordnung nach Anspruch 1, **dadurch gekennzeichnet, dass** die Muster (111, 131, 151; 211,231; 311; 411, 412, 431, 451, 432, 491, 492) des ersten Vorformlings (11, 15; 21; 31; 41, 45) und des zweiten Vorformlings (13; 23; 33; 43, 49) konjugierte Oberflächen haben, die dazu bestimmt sind, zusammen zu wirken, wenn die Muster in Eingriff sind, und dafür ausgelegt sind, die Vorformlinge ineinander eingesetzt zu halten.

3. Faseranordnung nach einem der vorhergehenden Ansprüche, **dadurch gekennzeichnet, dass** die Richtung, in der die Gewebe (F) des ersten Vorformlings (11,15;21;31;41, 45) übereinandergelegt sind, zu der Richtung, in der die Gewebe (F) des in den ersten Vorformling eingesetzten zweiten Vorformlings (13; 23; 33; 43, 49) übereinandergelegt sind, transversal ist.

4. Faseranordnung nach einem der vorhergehenden Ansprüche, **dadurch gekennzeichnet, dass** die Richtung, in der die Gewebe (F) des ersten Vorformlings (11, 15; 21; 31; 41, 45) übereinandergelegt sind, zu der Richtung, in der die Gewebe (F) des in den ersten Vorformling eingesetzten zweiten Vorformlings (13; 23; 33; 43, 49) übereinandergelegt sind, im Wesentlichen senkrecht ist.

5. Faseranordnung (1; 3; 4) nach einem der vorhergehenden Ansprüche, **dadurch gekennzeichnet, dass** der erste Vorformling (11; 31; 41) und der zweite Vorformling (13; 33; 49) Platten aus übereinandergelegten faserartigen Geweben (F) sind, wobei die Ebene der Gewebe des ersten Vorformlings in Bezug auf die Ebene der Gewebe des in den ersten Vorformling eingesetzten zweiten Vorformlings transversal ist, wobei diese Ebenen in der Einsetzzone der Vorformlinge konvergieren.

6. Faseranordnung (2) nach einem der Ansprüche 1 bis 4, **dadurch gekennzeichnet, dass** der erste Vorformling (21) eine Platte aus übereinandergelegten faserartigen Geweben (F) ist, während der zweite Vorformling (23) ein Rohr aus übereinandergelegten faserartigen Geweben (F) ist, wobei die Ebene der Gewebe des ersten Vorformlings in Bezug auf erzeugende Geraden des in den ersten Vorformling eingesetzten zweiten Vorformlings transversal ist, wobei diese Ebene und diese Geraden in der Einsetzzone der Vorformlinge konvergieren.

7. Verbundteil, **dadurch gekennzeichnet, dass** es eine Faseranordnung (1; 2; 3; 4) nach einem der vorhergehenden Ansprüche und einen Polymergrundstoff umfasst.

8. Verbundteil nach Anspruch 7, **dadurch gekennzeichnet, dass** die Faseranordnung (1; 2; 3; 4) aus Kohlenstofffasern, Glasfasern oder Aramidfasern gebildet ist und der Polymergrundstoff ein Polymerharz ist.

9. Verfahren zum Herstellen eines Verbundteils, **dadurch gekennzeichnet, dass** es die Schritte umfasst, in denen:
- wenigstens zwei Vorformlinge (11, 13, 15, 17; 21, 23; 31, 33, 35, 37; 41, 43, 45, 47, 49) durch Übereinanderlegen und Bestäuben faserartiger Gewebe (F) gebildet werden;
- wenigstens ein Muster (111, 131, 151; 211, 231; 311; 411, 412, 431, 451, 432, 491, 492) in jedem Vorformling ausgeschnitten wird, wobei das Muster (111, 151; 211; 311; 411, 412, 451) eines ersten Vorformlings (11; 21; 31; 41, 45) zu dem Muster (131; 231; 431, 491, 492) des zweiten Vorformlings (13; 23; 33; 43, 49) im Wesentlichen komplementär ist;
- der erste Vorformling (11, 15; 2 1; 3 1; 41, 45) und der zweite Vorformling (13; 23; 33; 43, 49) durch Herstellen eines Eingriffs zwischen ihren jeweiligen Mustern (111, 131, 151; 211, 231; 311; 411, 412, 431, 451, 432, 491, 492) ineinander eingesetzt werden;
- ein Polymerharz um die ineinander eingesetzten ersten und zweiten Vorformlinge eingespritzt wird.

10. Herstellungsverfahren nach Anspruch 9, **dadurch gekennzeichnet, dass** das Ausschneiden des ersten Vorformlings (11, 15; 21; 31; 41, 45) und des zweiten Vorformlings (13; 23; 33; 43, 49) durch Stanzen, durch Wasserstrahl, durch Laser oder manuell erfolgt.

## Claims

1. A fibrous assembly (1; 2; 3; 4) for a composite part, comprising at least two preforms (11, 13, 15, 17; 21, 23; 31, 33, 35, 37; 41,43, 45, 47, 49) each including stacked fibrous cloths (F), wherein each preform includes at least one structure (111, 131, 151; 211, 231; 311; 411, 412, 431, 451, 432, 491, 492), the structure (111, 151; 211; 311; 411, 412, 451) of a first preform (11, 15; 21; 31; 41, 45) being substantially complementary to the structure (131; 231; 431, 491, 492) of the second preform (11; 23; 33; 43, 49) and the first and second preforms being adapted to be fitted one into the other by engagement of their respective structures.

2. A fibrous assembly according to claim 1, **characterized in that** the structures (111, 131; 211, 231; 311; 411, 431, 451, 412, 491, 492) of the first (11, 15; 21; 31; 41, 45) and second (13; 23; 33; 43, 49) preforms have mating surfaces intended to co-operate when the structures are engaged, and suitable for keeping the preforms fitted one into the other.

3. A fibrous assembly according to any of the preceding claims, **characterized in that** the stacking direction of the cloths (F) of the first preform (11, 15; 21; 31; 41, 45) is transverse to the stacking direction of the cloths (F) of the second preform (13; 23; 33; 43, 49) fitted into the first preform.

4. A fibrous assembly according to any of the preceding claims, **characterized in that** the stacking direction of the cloths (F) of the first preform (11, 15; 21; 31; 41, 45) is substantially perpendicular to the stacking direction of the cloths (F) of the second preform (13; 23; 33; 43, 49) fitted into the first preform.

5. A fibrous assembly (1; 3; 4) according to any of the preceding claims, **characterized in that** the first (11; 31; 41) and second (13; 33; 49) preforms are plates of stacked fibrous cloths (F), the plane of the cloths of the first preform being transverse to the plane of the cloths of the second preform fitted into the first preform, said planes being concurrent in the zone in which the preforms fit into one another.

6. A fibrous assembly (2) according to any of claims 1 to 4, **characterized in that** the first preform (21) is a plate of stacked fibrous cloths (F), while the second preform (23) is a tube of stacked fibrous cloths (F), the plane of the cloths of the first preform being transverse to the generatrix lines of the second preform fitted into the first preform, said plane and said generatrix lines being concurrent in the zone in which the preforms fit into one another.

7. A composite part, comprising a fibrous assembly (1; 2; 3; 4) according to any of the preceding claims and a polymer matrix.

8. A composite part according to claim 7, **characterized in that** the fibrous assembly (1; 2; 3; 4) is constituted by carbon, glass or aramide fibres, the polymer matrix being a polymer resin.

9. A method for manufacturing a composite part, **characterized in that** it comprises the steps of:
- forming at least two preforms (11, 13, 15, 17; 21, 23; 31, 33, 35, 37; 41, 43, 45, 47, 49) by stacking and powdering fibrous cloths (F);
- cutting out at least one structure (111, 131, 151; 211, 231; 311; 411, 412, 431, 451, 432, 491, 492) in each preform, the structure (111, 151, 211; 311; 411, 412, 451) of a first preform (11; 21; 31; 41, 45) being substantially complementary to the structure (131; 231; 431, 491, 492) of the second preform (13; 23; 33; 43, 49);
- fitting the first (11, 15; 21; 31; 41, 45) and second (13; 23; 33; 43, 49) preforms one into the other by engagement of their respective structures (111, 131, 151; 211, 231; 311; 411, 412, 431, 451, 491, 492);
- injecting a polymer resin round the first and second preforms fitted into one another.

10. A manufacturing method according to claim 9, **characterized in that** the cutting-out of the first (11, 15; 21; 31; 41, 45) and second (13; 23; 33; 43, 49) preforms is carried out by means of a hollow punch, a water jet, or a laser or manually.
